## Europäisches Patentamt
## European Patent Office
## Office européen des brevets

(19)

(11) Numéro de publication : **0 026 680 B1**

## FASCICULE DE BREVET EUROPÉEN

(12)

(45) Date de publication du fascicule du brevet :
**29.02.84**

(51) Int. Cl.³ : **B 60 P 3/00**

(21) Numéro de dépôt : **80401059.3**

(22) Date de dépôt : **11.07.80**

(54) **Plate-forme pour le transport de grands volumes de verre.**

(30) Priorité : **18.07.79 DE 2928924**

(43) Date de publication de la demande :
**08.04.81 Bulletin 81/14**

(45) Mention de la délivrance du brevet :
**29.02.84 Bulletin 84/09**

(84) Etats contractants désignés :
**BE DE FR GB IT LU SE**

(56) Documents cités :
**DK-A- 101 400**
**FR-A- 2 361 246**
**US-A- 3 848 917**
**US-A- 4 037 870**

(73) Titulaire : **SAINT-GOBAIN VITRAGE**
**Les Miroirs 18, avenue d'Alsace**
**F-92400 Courbevoie (FR)**
**BE FR GB IT LU SE**
**VEGLA Vereinigte Glaswerke GmbH**
**Viktoria Allee 3-5**
**D-5100 Aachen (DE)**
**DE**

(72) Inventeur : **Brandt, Dietmar**
**Turpinstrasse 118**
**D-5100 Aachen (DE)**
Inventeur : **Gillessen, Hubert**
**Weberstrasse 42**
**D-5100 Aachen (DE)**
Inventeur : **Hueismann, Lothar**
**Pfarrer-Gaustrasse 15**
**D-5190 Stolberg (DE)**
Inventeur : **Wissgens, Hans**
**Stettinerstrasse 49**
**D-5100 Aachen (DE)**
Inventeur : **Heusch, Ernst**
**Am Hasselholz 16**
**D-5100 Aachen (DE)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

Plate-forme pour le transport de grands volumes de verre

L'invention concerne une plate-forme surbaissée pour le transport de grands carreaux de verre, en particulier sous forme de remorque ou semi-remorque sur le tablier de laquelle les piles de volumes de verre sont disposées sur chant, en position verticale.

Sous le terme de « piles de grands carreaux de verre » on entend des ensembles de volumes de verre ayant des surfaces d'environ 6 × 3 m qui sont rassemblés en charges de 10 t ou plus. Habituellement, lors de la fabrication du verre en feuille, on dispose les piles de volumes de ce type deux à deux sur des pupitres stables en forme de A, inclinées l'une vers l'autre et cerclées étroitement sur ces pupitres. Ces piles sont ensuite chargées avec leur pupitre sur des wagons de chemin de fer ou sur des camions à plate-forme surbaissée, comme par exemple décrit dans le brevet US-A-38 48 917.

Pour le transport par wagons de chemin de fer, les pupitres sont chargés de deux piles de carreaux de verre pesant autour de 12,5 t chacune. Lorsque le transport est effectué par route, les pupitres ne peuvent être chargés que de deux piles d'environ 10 t, sans quoi le poids total admissible serait dépassé. En effet, suivant les prescriptions en vigueur dans de nombreux pays, pour le trafic routier, ce poids total admissible est de 38 t.

Or les tracteurs et les plate-formes de construction connue ont un poids total de l'ordre de 15 t, ce qui laisse une charge utile d'environ 23 t, et le pupitre lui-même a un poids de plus de 3 t.

Le tablier des plate-formes connues étant prévu, comme il vient d'être dit, pour recevoir un pupitre chargé d'un poids total d'environ 23 t, il possède une structure particulièrement rigide et lourde et aussi une hauteur relativement grande.

Pour diminuer le poids des véhicules de ce type, il est connu de disposer dans la région du tablier deux essieux supplémentaires dont les roues se situent à l'extérieur de la surface porteuse. Cette adjonction permet certes d'alléger la construction de la plate-forme elle-même et la rend moins coûteuse, mais l'avantage se perd au moins en partie du fait de la dépense engendrée par l'installation des trains de roues supplémentaires.

L'invention a pour but de créer une plate-forme du type mentionné, mais transportant avec sécurité des piles de grands carreaux de verre de poids plus élevé que précédemment et, en particulier, des piles de 12,5 t, sans dépasser le poids total autorisé pour la circulation routière. On pourra ainsi expédier indifféremment par fer ou par route des piles de volumes de mêmes dimensions et de même poids.

Selon l'invention, l'ossature porteuse de cette plate-forme est constituée de l'assemblage rigide d'un tablier horizontal de hauteur réduite, formant un plancher surbaissé, de deux bâtis disposés transversalement à l'axe de la plate-forme, l'un à l'avant, l'autre à l'arrière, et porteurs chacun d'une console de support sur les trains de roulement, d'un châssis vertical s'étendant longitudinalement, ayant à peu près la hauteur des piles à transporter, auquel les autres éléments de l'ossature transmettent une part importante de la charge transportée et qui sert aussi d'étai pour poser et fixer les piles en position verticale.

Cette construction permet d'économiser du poids sans sacrifier solidité et rigidité de sorte qu'une telle plate-forme peut désormais transporter deux piles de verre de 12,5 t et plus. Le gain de poids provient essentiellement de ce que les piles peuvent chacune être chargées directement sur le véhicule, ce qui élimine le poids excédentaire des pupitres en A nécessaires jusqu'ici.

La face d'appui, qui appartenait précédemment à ces pupitres, reste indispensable mais elle est désormais directement fournie par le châssis longitudinal intégré à la structure de la plate-forme en tant qu'élément porteur, ce qui permet de diminuer l'épaisseur du tablier. Le plancher de la plate-forme s'en trouve abaissé et la hauteur utile augmentée d'autant.

Sur la plate-forme suivant l'invention, le fait que les piles de grands carreaux de verre sont transportées en position verticale évite les détériorations de surface qui se produisaient en position inclinée par friction des volumes de verre les uns sur les autres sous l'effet de la composante normale de leur propre poids. De plus, la nouvelle plate-forme peut aussi être utilisée pour le transport de volumes particulièrement minces, en piles enfermées dans des cadres périphériques comme ceux décrits par exemple dans la publication de brevet DE-A-27 58 263 ou le modèle d'utilité DE-V-77 19 134.

D'autres caractéristiques, particularités et avantages de l'invention ressortent de la description d'une forme préférée de mise en œuvre ainsi que des dessins joints. Ceux-ci montrent :

Figure 1 une vue latérale d'une plate-forme surbaissée suivant l'invention pour le transport de piles de grands carreaux de verre ;

Figure 2 une vue arrière de la plate-forme de la Figure 1 ;

Figure 3 une vue arrière d'une autre plate-forme selon l'invention, et

Figure 4 une vue analogue à celle de la Figure 3 mais chargée de deux piles de verre mince placées dans des cadres.

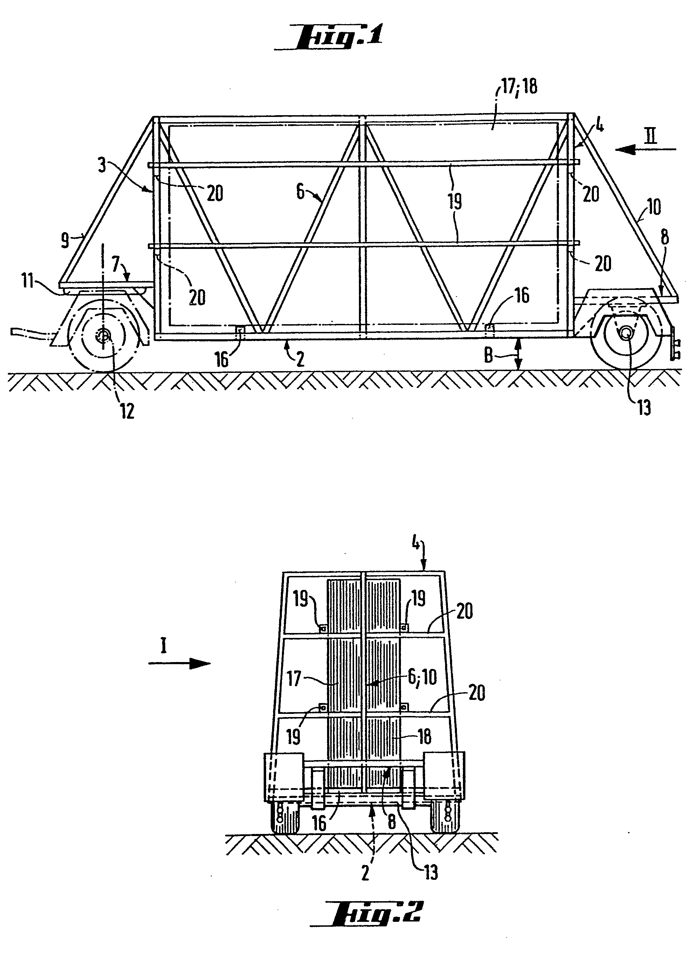

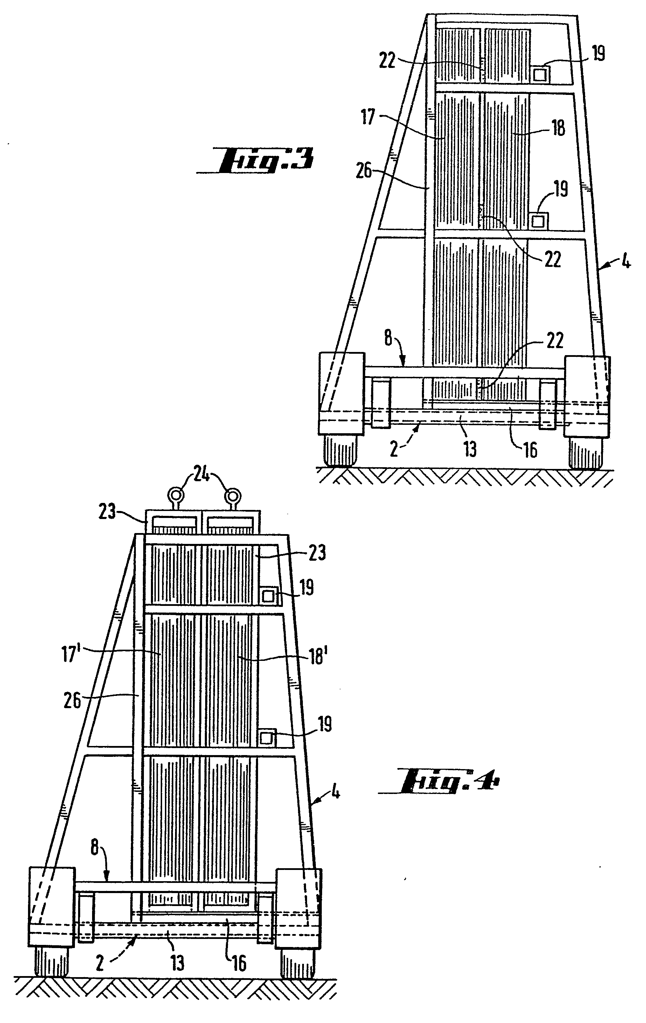

Une plate-forme suivant l'invention, du type présenté dans les Figures 1 et 2 possède un tablier autoporteur possédant en position d'utilisation une garde au sol B et de structure pratiquement plane sur toute la largeur du véhicule. Aux extrémités du tablier 2 existent un bâti avant ou frontal 3 et un bâti arrière 4 disposés à angle droit vers le haut.

Sur le tablier 2, suivant l'axe du véhicule, est disposé un châssis vertical 6 relié à ses extrémités d'une part au bâti avant 3, d'autre part au bâti arrière 4. A l'avant du bâti frontal 3 et à l'arrière du bâti arrière 4 sont fixées des consoles 7 et 8 à peu près horizontales destinées à venir reposer sur les trains de roulement de la plate-forme.

Le tablier 2, le bâti avant 3, le bâti arrière 4, le châssis vertical longitudinal 6 de même que les consoles avant et arrière 7, 8 sont formés de profilés en treillis assemblés rigidement selon les règles de l'art ; on utilise avantageusement des tubes à section carrée ainsi que des profilés en U et en T.

Les éléments 2, 3, 4 et 6 sont assemblés de préférence par soudure, de manière à constituer un treillis autoporteur rigide en torsion. Des jambes de force 9 et 10 étayent les consoles 7 et 8 par rapport respectivement au bâti avant 3 et au bâti arrière 4. Sous la console 7 on peut placer une plaque porteuse 11 comme cela est indiqué Figure 1 pour l'attelage sur le tracteur (non représenté ici).

Si l'on veut disposer d'une remorque autonome, on peut monter sous la console 7 un train articulé 12 au lieu de la simple plaque 11. Sous la console 8 est monté un essieu 13.

On place sur le tablier 2 des cales en bois 16 recouvertes d'un matériau élastique, qui servent de semelles et recouvrent les piles de verre, les maintenant à distance suffisante du plancher pour que celles-ci puissent être placées sur la plate-forme à l'aide d'un cadre de transport usuel comme celui décrit dans le brevet français FR-A-2 192 043.

Les piles de carreaux de verre 17 et 18 sont placées verticalement sur la plate-forme, de chaque côté du châssis 6, en appui direct sur celui-ci.

Pour fixer les piles 17, 18 on utilise des longrines de serrage 19 montées sur les traverses horizontales 20 appartenant au bâti avant 3 et au caisson arrière 4. Les longrines 19 peuvent être tendues l'une contre l'autre de façon connue ou fixées sur les traverses 20.

La Figure 3 montre une vue arrière d'une variante sur laquelle le châssis vertical 26 est déporté par rapport au plan longitudinal médian du véhicule. Ceci permet de charger ou décharger les piles de verre 17, 18 d'un seul côté ce qui simplifie quelque peu l'utilisation. Dans ce cas on interpose entre les piles de verre 17, 18 des planches d'appui et d'espacement 22. Les deux piles de verre sont alors serrées ensemble contre le châssis 6 à l'aide des deux longrines 19.

La Figure 4 montre la même version de la plate-forme que celle de la Figure 3. Cependant celle-ci n'est pas chargée de deux piles de carreaux de verre nues mais de deux piles 17' et 18' enfermées dans des cadres 23. Cette solution est utile lorsque les piles sont constituées par des carreaux de verre très minces, par exemple de 3 mm et moins d'épaisseur. Les cadres utilisés sont décrits par exemple dans le modèle d'utilité allemand DE-V-77 19 134. Ils sont pourvus au sommet d'anneaux de suspension 24 de sorte qu'ils peuvent être chargés et déchargés sans emploi d'un dispositif auxiliaire, en agrippant les anneaux 24 à l'aide d'un dispositif élévateur approprié. Dans ce cas la réduction de hauteur de la plate-forme à plancher surbaissé selon l'invention présente un avantage particulier puisque le cadre 23 possède une hauteur supérieure à celle des piles de verre seules et le risque de dépasser la hauteur totale autorisée s'en trouve diminué.

Ce véhicule peut de façon connue être pourvu de bâches de protection contre les intempéries et les détériorations mécaniques, bâches qui peuvent être enlevées pendant le chargement. Il est très commode d'incorporer les bâches à la plate-forme, les repliant en accordéon ou les enroulant de sorte qu'il est inutile de prévoir une grue pour les mettre en place après chargement.

## Revendications

1. Plate-forme surbaissée pour le transport de grands carreaux de verre, en particulier semi-remorque sur le tablier de laquelle les piles de volumes de verre sont disposées sur chant, caractérisée en ce que l'ossature porteuse de cette plate-forme est constituée de l'assemblage rigide d'un tablier horizontal (2) de hauteur réduite par rapport au sol, formant un plancher surbaissé, de deux bâtis disposés transversalement à l'axe longitudinal de la plate-forme, l'un (3) à l'avant, l'autre (4) à l'arrière et porteurs chacun d'une console (7, 8) de support sur les trains de roulement (13) de la plate-forme, d'un châssis vertical (6) s'étendant longitudinalement, ayant à peu près la hauteur des piles à transporter, auquel les autres éléments (2, 3, 4, 7, 8) de l'ossature transmettent une part importante de la charge transportée et qui sert aussi d'étai pour poser et fixer les piles de verre en position verticale.

2. Plate-forme suivant la revendication 1, caractérisée en ce que le châssis vertical (6) est disposé dans le plan longitudinal médian de la plate-forme.

3. Plate-forme suivant la revendication 2, caractérisée en ce que le châssis vertical (6) possède une structure en treillis soudé.

4. Plate-forme suivant l'une des revendications 1 à 3, caractérisée en ce que le bâti avant (3) et le bâti arrière (4) sont reliés aux consoles (7, 8) par des jambes de force (9, 10).

5. Plate-forme suivant l'une des revendications 1 à 4, caractérisée en ce que le bâti avant (3) et le bâti arrière (4) présentent des traverses horizontales (20) servant de support à des longrines de serrage (19) restant transversalement les piles de volumes.

## Claims

1. A low-loading platform for transport of large panes of glass, such as an articulated trailer vehicle on the deck of which glass sheets are stacked together on edge, characterised in that the skeleton carrying the platform comprises a rigid assembly of a horizontal deck (2) which is relatively low above the ground forming a low-loading support surface, two frameworks arranged transversely to the longitudinal axis of the platform, one (3) at the front and the other (4) at the rear and each carrying a supporting bracket (7, 8) on the undercarriage (13) of the platform, and a vertical frame (6) extending longitudinally and substantially to the height of the stacked sheets to be transported, on to which the other elements (2, 3, 4, 7, 8) of the skeleton transmit a large part of the weight transported and which also serves as a stay for positioning and fixing the stacks of glass in their vertical position.

2. A platform according to claim 1, characterised in that the vertical frame (6) is arranged in the central longitudinal plane of the platform.

3. A platform according to claim 2, characterised in that the vertical frame (6) has a welded lattice structure.

4. A platform according to one of the claims 1 to 3, characterised in that the front framework (3) and the rear framework (4) are connected to the supporting brackets (7, 8) by means of abutments (9, 10).

5. A platform according to one of the claims 1 to 4, characterised in that the front framework (3) and the rear framework (4) are provided with horizontal members (20) serving to support longitudinal holding beams (19) holding transversely the stacks of sheets.

**Ansprüche**

1. Tieflader für den Transport von großen Glasscheiben, insbesondere Sattelauflieger, auf dessen Tiefbett die Glasscheibenpakete in aufrechter Stellung angeordnet werden, dadurch gekennzeichnet, daß die tragende Konstruktion des Tiefladers aus einem das Tiefbett bildenden starren horizontalen Bodenrahmen (2) von geringer Höhe in Bezug auf den Boden, aus zwei quer zur Längsachse des Tiefladers angeordneten Rahmen, von denen der eine Rahmen (3) frontseitig, und der andere Rahmen (4) heckseitig angeordnet ist, und die jeweils einen Konsolrahmen (7, 8) tragen, der sich auf den Achsen (13) des Tiefladers abstützt, und aus einem vertikalen sich in Längsrichtung erstreckenden Rahmen (6) etwa von der Höhe der zu transportierenden Glasscheibenpakete besteht, auf den die anderen Elemente (2, 3, 4, 7, 8) der Konstruktion einen wesentlichen Teil der transportierten Last übertragen und der außerdem für die Abstützung und Festlegung der Glaspakete in vertikaler Stellung dient.

2. Tieflader nach Anspruch 1, dadurch gekennzeichnet, daß der vertikale Rahmen (6) in der mittleren Längsebene des Tiefladers angeordnet ist.

3. Tieflader nach Anspruch 2, dadurch gekennzeichnet, daß der vertikale Rahmen (6) aus einer geschweißten Gitterkonstruktion besteht.

4. Tieflader nach einem der Ansprüche 1 bis 3, dadurch gekennzeichnet, daß der frontseitig angeordnete Rahmen (3) und der heckseitig angeordnete Rahmen (4) mit den Konsolrahmen (7, 8) jeweils über Stützstreben (9, 10) verbunden sind.

5. Tieflader nach einem der Ansprüche 1 bis 4, dadurch gekennzeichnet, daß der frontseitig angeordnete Rahmen (3) und der heckseitig angeordnete Rahmen (4) horizontale Streben (20) aufweisen, die als Auflager für die Befestigungsstangen (19) dienen, die die Glasscheibenpakete in Querrichtung festhalten.

**Fig.1**

**Fig.2**

Fig:3

Fig:4